# EUROPÄISCHE PATENTANMELDUNG

(11) **EP 4 234 232 A1**
(43) Veröffentlichungstag der Anmeldung: **30.08.2023**
(21) Anmeldenummer: 23154641.7
(22) Anmeldetag: 02.02.2023
(51) Int. Cl.: B32B 27/12, B32B 5/02, B32B 7/12, B32B 27/30, D06N 5/00, E04D 12/00

(54) **BAHNFÖRMIGES VERBUNDMATERIAL ALS FASSADENBAHN ODER DACHBAHN**

(30) Priorität: 28.02.2022 DE 102022104757
(71) Anmelder: K.L. Kaschier- und Laminier GmbH, 48455 Bad Bentheim-Gildehaus (DE)
(72) Erfinder: Schulze Wehninck, Rembert, 82327 Tutzing (DE); Kischa, Lars, 51674 Wiehl (DE)
(74) Vertreter: Cohausz Hannig Borkowski Wißgott

(57) **Zusammenfassung**

Die Erfindung betrifft ein bahnförmiges Verbundmaterial (1) zur Verwendung als Fassaden- oder Dachbahn (1a, 1b), insbesondere Dachunterspann- oder Dachabdeckbahn zum Schutz von Außenwänden oder Dächern von Gebäuden umfassend eine Trägerschicht (2), die aus einer aus Glasfasern hergestellten Textilie gebildet ist, eine Folie (4) aus einem fluorierten Polymer und ein Haftmittel (3), mittels welchem die Folie (4) flächig auf die Trägerschicht (2) aufgebracht ist, wobei das Haftmittel (3) ein Silikonkleber ist. Ein solches Verbundmaterial hat den Vorteil, dass es nicht brennbar ist. Die Erfindung betrifft außerdem ein Verfahren zur Herstellung eines solchen Verbundmaterials, dessen Verwendung als Fassaden- oder Dachbahn (1a, 1b) sowie eine Fassaden- (10) und Dachkonstruktion (15) mit einer solchen Verbundbahn.

## Beschreibung

Die Erfindung betrifft ein bahnförmiges Verbundmaterial zur Verwendung als Fassaden- oder Dachbahn, insbesondere Dachunterspann- oder Dachabdeckbahn zum Schutz von Außenwänden oder Dächern von Gebäuden, umfassend eine Trägerschicht, die aus einer aus Glasfasern hergestellten Textilie gebildet ist, eine Folie aus einem fluorierten Polymer und ein Haftmittel, mittels welchem die Folie flächig auf die Trägerschicht aufgebracht ist. Ferner betrifft die Erfindung ein Verfahren zur Herstellung des bahnförmigen Verbundmaterials, dessen Verwendung sowie eine Fassaden- und eine Dachkonstruktion, die das erfindungsgemäße Verbundmaterial umfasst.

Als Fassaden- oder Dachbahn eingesetztes Verbundmaterial zum Schutz von Gebäuden ist allgemein bekannt, beispielsweise aus den deutschen Patentanmeldungen DE 102018008585 A1, DE 102018112260 A1 und DE102005035246 A1.

Fassadenbahnen dienen als Schutzbahn dem Schutz einer Hauswand oder Fassade vor diversen Umwelteinflüssen, insbesondere vor Schlagregen und Flugschnee. Sie werden auf die einer Hauswand vorgesetzten Dämmung aufgebacht, indem sich zwei nebeneinanderliegende Bahnen überlappen. Die Befestigung kann beispielsweise mittels Tackerklammern erfolgen, wobei eine Befestigungsstelle von der Nachbarbahn überdeckt wird, um die Dichtheit zu gewährleisten. Die Nachbarbahn wird hierzu mit der letzten Bahn verklebt, wozu die Bahnen integrierte Selbstklebestreifen aufweisen können. Vor die derart abgedeckte Dämmung wird dann eine aus Fassadenelementen bestehende offene oder geschlossene Fassade vorgesetzt oder vorgehängt, wobei auch die geschlossene Fassade hinterlüftet sein kann. Je nach Fassadenbahn ist hierbei ein maximaler Fugenanteil und eine maximale lichte Fugenbreite, d.h. Abstand zwischen zwei Fassadenelementen zu berücksichtigen. Fassadenbahnen sind winddicht, strapazierfähig und UV-beständig. Sie sind außerdem diffusionsoffen, auch als "atmungsaktiv" bezeichnet, so dass eine Austrocknung von Restfeuchtigkeit in der Dämmung nach außen möglich ist. Überwiegend bestehen Fassadenbahnen aus einem Polyester-Vlies mit einer wasserdichten Beschichtung. Fassadenbahnen können sowohl vertikal als auch horizontal verlegt werden, so dass sie sich auch als Dachunterspann- oder Dachabdeckbahn zum Schutz von Dachkonstruktionen jedweder Art eignen.

Eine Temperaturbeständigkeit ist bei Fassadenbahnen in der Regel nur zwischen - 30°C und +80°C gegeben. Ferner sind sie nach der Norm DIN EN 13501-1 aus Mai 2019 überwiegend als "normal entflammbar" der Brandschutzklasse E zugeordnet. Kommt es zu einem Brand an einem Gebäude, das mit einer derartigen Fassadenbahn eingekleidet ist, und springt das Feuer auf die Fassade über, kann sich der Brand über die Fassadenbahn leicht ausbreiten, wie dies in der Vergangenheit bereits geschehen ist.

Nicht brennbare oder schwer entflammbare Fassadenbahnen sind bekannt. Beispielsweise beschreibt die deutsche Patentanmeldung DE 1 659 300 A1 eine schwerentflammbare, zum Verkleben geeignete Kunststoff-Verbundbahn zur Dachabdeckung, bestehend aus einer schwerentflammbaren Kunststoff-Folie und einem verfestigenden und ebenfalls schwer- oder nichtentflammbaren Gewebe, Gewirke oder Vlies, wobei das schwer- oder nichtentflammbare Gewebe, Gewirke oder Vlies auf der zum Verkleben bestimmten Unterseite in der Weise fixiert ist, dass es vom Kunststoff nicht umhüllt wird. Oberseitig ist die Verbundbahn mit einer schwerentflammbaren und besonders wetterbeständigen Folie aus Polyvinylfluorid oder Polytetrafluorethylen (PTFE) verbunden. Wie allerdings die Verbindung zwischen der wetterbeständigen Folie und dem Gewebe, Gewirke oder Vlies erfolgt, offenbart DE 1 659 300 A1 nicht. Die heutzutage üblicherweise verwendeten Haftmittel genügen den Anforderungen der Norm DIN EN 13501-1 für schwer entflammbare Materialien im Bauwesen nicht.

Ein feuerhemmender Flachdach-Oberflächenschutz ist aus der deutschen Patentanmeldung DE2433089A1 bekannt. Eine schwerentflammbare, zum Verkleben geeignete Kunststoff-Verbundbahn für die Dachabdeckung, deren Oberseite mit PTFE beschichtet ist, offenbart außerdem die deutsche Offenlegungsschrift DE 1659300 A.

Es ist deshalb Aufgabe der vorliegenden Erfindung eine Fassaden- oder Dachbahn aus einem gattungsgemäßen bahnförmigen Verbundmaterial dahingehend zu verbessern, dass sie einen verbesserten Brandschutz hat.

Diese Aufgabe wird durch das Verbundmaterial mit den Merkmalen des Anspruchs 1, sowie durch das Verfahren nach Anspruch 11, die Verwendung nach Anspruch 12, die Fassadenkonstruktion nach Anspruch 13 und die Dachkonstruktion nach Anspruch 14 gelöst. Vorteilhafte Weiterbildungen sind in den Unteransprüchen wiedergegeben und werden nachfolgend erläutert.

Erfindungsgemäß wird ein bahnförmiges Verbundmaterial vorgeschlagen, umfassend eine Trägerschicht, die aus einer aus Glasfasern hergestellten Textilie gebildet ist, eine Folie aus einem fluorierten Polymer und ein Haftmittel, mittels welchem die Folie flächig auf die Trägerschicht aufgebracht ist, wobei das Haftmittel ein Silikonkleber ist. Entsprechend dem erfindungsgemäßen Verfahren wird vorgeschlagen, zwischen die Folie und der Trägerschicht als Haftmittel einen Silikonkleber zu bringen. Durch die Kombination einer Glasfaserträgerschicht, eines Silikonklebers und einer fluorierten Polymerfolie wird ein Verbundmaterial geschaffen, dass nicht brennbar ist, mithin mindestens die Brandschutzklasse A2 gemäß der internationalen Brandschutznorm EN 13501-1 (Mai 2019) erreicht. Gleichzeitig kann das Verbundmaterial einfach und preiswert hergestellt werden.

Ein Silikonkleber ist ein synthetisches elastisches Polymer auf Basis von Silikon, das ausgehend von einem plastisch verformbaren Zustand durch eine Vernetzungsreaktion in einen gummielastischen Zustand überführbar ist. Dabei kann sowohl ein neutralvernetzendes Silikon, z.B. ein Alcoxysilikon oder ein Oximsilikon, als auch ein essigvernetzendes Silikon, wie z.B. ein Azetatsilikon, verwendet werden. Silikone sind besonders wärmebeständig und erreichen in der Regel mindestens die Brandschutzklasse B1 für schwer entflammbare Baustoffe gemäß der deutschen Brandschutznorm DIN 4102 (05/1998), so dass sie sich insbesondere auch dafür eignet, schwer entflammbare Fassadenbahnen herzustellen.

Des Weiteren kann der Silikonkleber ein- oder zweikomponentig sein. Bei einem einkomponentigen Silikonkleber handelt es sich um ein gebrauchsfertiges Material, dass ohne weitere Hilfsmittel an der Luft von einem zähflüssigen in einen festen, gummielastischen Zustand übergeht. Demgegenüber besteht ein zweikomponentiger Silikonkleber aus einer ersten Komponente, die den eigentlichen Klebstoff bildet, und einer zweiten Komponente, die die chemische Vernetzung der ersten Komponente auslöst und deshalb mit dieser gemischt werden muss.

Einkomponentige Silikonkleber sind in der Verarbeitung und Anwendung einfacher, weil die zweite Komponente fehlt und kein Mischprozess stattfinden muss. Sie können jedoch noch sehr lange gelagert werden (ca. 9-12 Monate), weil der Vernetzungsprozess im Lagerungsbehälter stattfindet. Zweikomponentige Silikonkleber haben eine besonders hohe Eigenhaftung und höhere mechanische Festigkeit.

Das Haftmittel kann mit einem Auftragsgewicht zwischen 5 und 50g/m² aufgetragen sein. Dies gewährleistet zum einen eine gute Haftung zwischen der Trägerschicht und der Folie und bewirkt zum anderen, dass die vom Haftmittel gebildete Haftmittelschicht hochdiffusionsoffen ist.

Vorzugsweise weist die Folie eine Dicke zwischen 8µm und 100µm auf. Sie bildet somit eine Membran, die ebenfalls diffusionsoffen ist. In Verbindung mit der hochdiffusionsoffenen Haftmittelschicht ist somit gewährleistet, dass die Fassadenbahn atmungsaktiv ist und Restfeuchte durch das Verbundmaterial diffundieren kann.

Es ist ferner vorteilhaft, wenn die Folie aus Polytetrafluorethylen besteht, da dieses vollfluorierte Polymer, auch als PTFE oder nach dem Handelsnahmen der Firma DuPont als Teflon^{®} bezeichnet, nicht brennbar ist. Vielmehr zersetzt es sich bei heißer Flamme.

Bevorzugt besteht die Folie aus expandiertem Polytetrafluorethylen (e-PTFE). Dabei handelt es um mechanisch gestrecktes PTFE, das von W. L. Gore & Associates entwickelt wurde. Eine solche Folie hat den Vorteil, dass sie eine besonders hohe Porosität aufweist und damit die Diffusionsoffenheit noch weiter verbessert ist.

Die Trägerschicht kann besonders bevorzugt ein Gewebe oder Vlies sein. Dabei können alle gängigen Gewebe auf Basis von Glasfasern zum Einsatz kommen, jedoch keine thermisch oder chemisch gebundenen Gewebe. Insbesondere kann die Trägerschicht ein Gewicht zwischen 100g/m² und 600g/m² aufweisen. Damit kann die Trägerschicht unterschiedlichen Dicken und folgemäßig unterschiedliche Reißfestigkeiten aufweisen, so dass sich das Verbundmaterial für viele Anwendungsfälle eignet.

Des Weiteren kann die Trägerschicht mit einer sogenannten Schiebefestigkeit ausgerüstet sein. Die verbessert die Stabilität und Verarbeitbarkeit des Verbundmaterials. Bei der Schiebefestigkeit handelt es sich um die Widerstandsfähigkeit der Textilie gegen eine horizontale Verschiebung der Fäden im Gewebe aus ihrer ursprünglichen Lage. Die Schiebefestigkeit verhindert diese Verschiebbarkeit. Als "Ausrüstung mit einer Schiebefestigkeit" versteht man folglich den technischen Vorgang, eine Textilie mit einer Widerstandsfähigkeit gegen das Verschieben der Fäden in der Textilie auszustatten. Dies kann beispielsweise erreicht werden, indem die Faseroberfläche rauer gemacht wird oder indem die Kreuzungspunkte der Fäden verklebt werden. Hierzu kann die Trägerschicht beispielsweise mit Acrylat, Polyurethan, Silikon oder eine Mischung aus diesen Stoffen getränkt sein, um weiterhin die Nichtbrennbarkeit zu gewährleisten.

Unabhängig davon kann die Trägerschicht auf wenigstens einer flächigen Seite mit einem Beschichtungsmaterial beschichtet sein. Das Beschichtungsmaterial kann Acrylat, Polyurethan, Silikon oder eine Mischung aus diesen Stoffen sein. Dabei sollte die Beschichtung maximal ein Gewicht von 30g/m² aufweisen.

Das Verbundmaterial kann in Breiten bis zu 2,5m hergestellt werden.

Die Erfindung betrifft des Weiteren die Verwendung des erfindungsgemäßen bahnförmigen Verbundmaterials als Fassaden- oder Dachbahnbahn, insbesondere als Dachunterspann- oder Dachabdeckbahn zum Schutz von Fassaden oder Dachkonstruktionen.

Ferner betrifft die Erfindung eine Fassadenkonstruktion eines Gebäudes mit einer Außenwand, vor der eine Dämmung angeordnet ist, die zur Außenseite von einer Fassadenabdeckung aus Fassadenelementen abgedeckt ist, wobei zwischen der Fassadenabdeckung und der Dämmung das erfindungsgemäße bahnförmige Verbundmaterial als Fassadenbahn angeordnet ist.

Schließlich betrifft die Erfindung auch eine Dachkonstruktion eines Gebäudes mit einer Dachunterkonstruktion, die eine Dämmung umfasst und zur Außenseite von einer Dachabdeckung aus Dachelementen abgedeckt ist, wobei zwischen der Dachabdeckung und der Dämmung das erfindungsgemäße bahnförmige Verbundmaterial als Dachbahn, insbesondere als Dachunterspann- oder Dachabdeckbahn angeordnet ist.

Weitere Merkmale, Eigenschaften, Wirkungen und Vorteile der Erfindung werden nachfolgend anhand von Ausführungsbeispielen und der beigefügten Figuren näher erläutert. Die in den Figuren enthaltenen Bezugszeichen behalten von Figur zu Figur ihre Bedeutung, soweit nichts Anderes angegeben ist. So bezeichnen Bezugszeichen stets dieselben oder äquivalente Komponenten, Bereiche, Richtungs- oder Ortsangaben.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus. Es zeigen:
- Fig. 1:: eine Prinzipdarstellung eines Ausschnitts aus einer Fassadenkonstruktion
- Fig. 2:: eine Prinzipdarstellung eines Ausschnitts aus einer Dachkonstruktion
- Fig. 3:: ein erfindungsgemäßes Verbundmaterial gemäß einer ersten Ausführungsvariante
- Fig. 4:: ein erfindungsgemäßes Verbundmaterial gemäß einer zweiten Ausführungsvariante

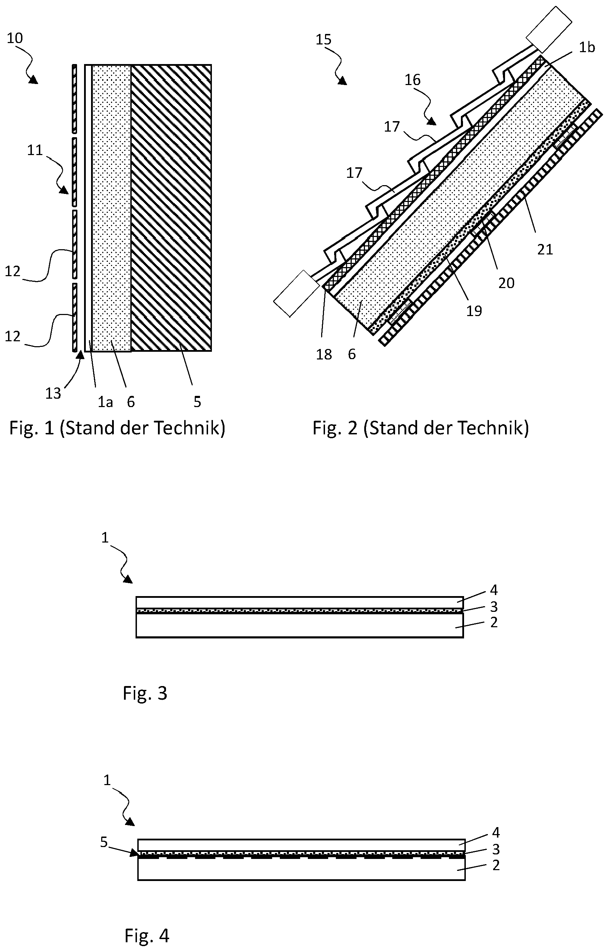

Figur 1 zeigt eine vereinfachte Darstellung einer Fassadenkonstruktion 10 im Querschnitt, wie sie an sich bekannt ist. Sie besteht aus einer vor einer Gebäudewand 5 angeordneten Dämmung 6, auf welcher auf der der Wand 6 abgewandten Seite, d.h. nach außen hin, eine Fassadenbahn 1a angeordnet ist. Die Dämmung 5, bzw. Fassadenbahn 1a ist von einer die eigentliche, für eine Person sichtbare Fassade des Gebäudes bildenden Fassadenabdeckung 11 aus einzelnen Fassadenelementen 12 abgedeckt. Die Fassadenbahn 1a ist somit zwischen der Dämmung 6 und der Fassadenabdeckung 11 angeordnet. Zwischen den Fassadenelementen 12 und der Fassadenbahn 1a besteht in dieser Darstellung ein Abstand bildender Spalt 13, der durch nicht dargestellte Halteelemente wie z.B. Latten bedingt ist, über welche die Fassadenelemente 12 an der Wand 5 befestigt sind.

Figur 2 zeigt eine vereinfachte Darstellung einer Dachkonstruktion 15 im Querschnitt, wie sie an sich bekannt ist. Sie besteht aus nicht dargestellten Dachsparren, zwischen denen einen Dämmung 6 angeordnet ist, welche hier zur Dachinnenseite hin mit einer Dampfsperre 19 versehen ist. Auf den Sparren sind zur Dachinnenseite hin Latten 20 einer Konterlattung angeordnet, an welchen wiederum eine Wandinnenverkleidung 21, z.B. eine Rigips-Platte, angebracht ist. Auf der der Wandinnenverkleidung 21 abgewandten Seite der Dämmung 6 sind Latten 18 einer Dachlattung an den Sparren befestigt, die außenseitig von einer Dachabdeckung 16 (Dachhaut) aus einzelnen Dachelementen 17, z.B. Dachziegeln, abgedeckt ist. Zwischen der Dämmung 6 und der Dachabdeckung 16 ist eine Dachbahn 1b angeordnet, die hier eine Unterspannbahn 1b bildet.

Die Fassadenbahn 1a schützt die Gebäudewand 5 primär vor Schlagregen und Flugschnee. Selbiges gilt für die Dachbahn 1b, die die Dachunterkonstruktion 6, 20, 21, d.h. die Sparren und die Dachinnenkonstruktion 20, 21 schützt. Die Fassaden- und Dachbahn 1a, 1b sind außerdem winddicht und UV-beständig.

Erfindungsgemäß ist vorgesehen, die Fassadenbahn 1a gemäß Figur 1 oder die Dachbahn 1b gemäß Figur 2 aus einem bahnförmigen Verbundmaterial 1 herzustellen, wie es in den Figuren 3 und 4 dargestellt ist. Ein derartiges Verbundmaterial 1 besteht gemäß Figur 3 aus wenigstens drei Schichten, nämlich einer Trägerschicht 2, die aus einer aus Glasfasern hergestellten Textilie gebildet ist, einer Folie 4 aus einem fluorierten Polymer und einem Haftmittel 3, mittels welchem die Folie 4 flächig auf die Trägerschicht 2 aufgebracht ist. Die Trägerschicht 2 ist hier ein Glasgewebe mit einem Gewicht zwischen 100g/m² und 600g/m². Des Weiteren besteht die Folie 4 aus PTFE (Polytetrafluorethylen), vorzugsweise e-PTFE, mit einer Dicke zwischen 8µm und 100µm. Als Haftmittel 3 wird ein Silikonkleber mit einem Auftragsgewicht zwischen 5 und 50g/m² verwendet. Das so hergestellte Verbundmaterial 1 erreicht die Brandschutzklasse A2 gemäß EN 13501-1 (Mai 2019) und ist mithin nicht brennbar, wobei weder Rauch entsteht noch ein brennendes Tropfen geschmolzenen Materials vorliegt, wenn das Material dem Feuer ausgesetzt ist. Vielmehr zersetzen sich alle Schichten des Verbundmaterials im Feuer.

Figur 4 zeigt eine zweite Ausführungsvariante des Verbundmaterials 1. Es unterscheidet sich von der ersten Ausführungsvariante in Figur 3 lediglich darin, dass die Trägerschicht 2 eine Beschichtung 5 auf der der Folie 4 zugewandten Seite aufweist. Das Material der Beschichtung 5 ist Acrylat, Polyurethan, Silikon oder einer Mischung aus diesen Stoffen. Durch diese Beschichtung 5 wird eine Schiebefestigkeit der Trägerschicht 2, d.h. des Glasgewebes 2 erreicht. Die Beschichtung 5 hat ein Gewicht von weniger als 30g/m².

In einer nicht dargestellten Ausführungsvariante kann die Beschichtung auf der der Folie 4 abgewandten Seite der Trägerschicht 2 auf diese aufgebracht sein. Ferner können in einer weiteren Ausführungsvariante sowohl die der Folie 4 zugewandte als auch die ihr abgewandte Seite die genannte Beschichtung 5 aufweisen. Die Beschichtungen der beiden Seiten können aus demselben Material oder aus verschiedenen Materialen bestehen.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls", "geeignet" oder dergleichen angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

## Patentansprüche

1. Bahnförmiges Verbundmaterial (1) zur Verwendung als Fassaden- oder Dachbahn (1a, 1b), insbesondere Dachunterspann- oder Dachabdeckbahn zum Schutz von Außenwänden oder Dächern von Gebäuden umfassend eine Trägerschicht (2), die aus einer aus Glasfasern hergestellten Textilie gebildet ist, eine Folie (4) aus einem fluorierten Polymer und ein Haftmittel (3), mittels welchem die Folie (4) flächig auf die Trägerschicht (2) aufgebracht ist, **dadurch gekennzeichnet, dass** das Haftmittel (3) ein Silikonkleber ist.

2. Verbundmaterial (1) nach Anspruch 1, **dadurch gekennzeichnet, dass** die Folie (4) eine Dicke zwischen 8µm und 100µm aufweist.

3. Verbundmaterial (1) nach Anspruch 1 oder 2, **dadurch gekennzeichnet, dass** die Folie (4) aus Polytetrafluorethylen oder e-PTFE besteht.

4. Verbundmaterial (1) nach einem der vorherigen Ansprüche, **dadurch gekennzeichnet, dass** das Haftmittel (3) mit einem Auftragsgewicht zwischen 5 und 50g/m² aufgetragen ist.

5. Verbundmaterial (1) nach einem der vorherigen Ansprüche, **dadurch gekennzeichnet, dass** die Trägerschicht (2) ein Gewebe oder Vlies ist.

6. Verbundmaterial (1) nach einem der vorherigen Ansprüche, **dadurch gekennzeichnet, dass** die Trägerschicht (2) ein Gewicht zwischen 100g/m² und 600g/m² aufweist.

7. Verbundmaterial (1) nach einem der vorherigen Ansprüche, **dadurch gekennzeichnet, dass** die Trägerschicht (2) mit einer Schiebefestigkeit ausgerüstet ist.

8. Verbundmaterial (1) nach Anspruch 7, **dadurch gekennzeichnet, dass** die Trägerschicht (2) zur Erreichung der Schiebefestigkeit mit Acrylat, Polyurethan, Silikon oder eine Mischung aus diesen Stoffen getränkt ist.

9. Verbundmaterial (1) nach einem der vorherigen Ansprüche, **dadurch gekennzeichnet, dass** die Trägerschicht (2) auf wenigstens einer Seite mit einer Beschichtung (5) beschichtet ist, insbesondere aus Acrylat, Polyurethan, Silikon oder einer Mischung aus diesen Stoffen.

10. Verbundmaterial (1) nach Anspruch 9, **dadurch gekennzeichnet, dass** die Beschichtung (5) maximal ein Gewicht von 30g/m² aufweist.

11. Verfahren zur Herstellung eines bahnförmiges Verbundmaterials (1) zur Verwendung als Fassaden- oder Dachbahn (1a, 1b), insbesondere als Dachunterspann- oder Dachabdeckbahn zum Schutz von Außenwänden oder Dächern von Gebäuden umfassend eine Trägerschicht (2), die aus einer aus Glasfasern hergestellten Textilie gebildet ist, einer Folie (4) aus PTFE und ein Haftmittel (3), mittels welchem die Folie (4) flächig auf die Trägerschicht (2) aufgebracht ist, **dadurch gekennzeichnet, dass** als Haftmittel (3) zwischen die Trägerschicht (2) und die Folie (4) ein Silikonkleber gebracht wird.

12. Verwendung eines bahnförmigen Verbundmaterials (1) nach einem der Ansprüche 1 bis 10 als Fassaden- oder Dachbahn (1a, 1b), insbesondere Dachunterspann- oder Dachabdeckbahn zum Schutz von Fassaden oder Dachkonstruktionen.

13. Fassadenkonstruktion (10) eines Gebäudes mit einer Außenwand (5), vor der eine Dämmung (6) angeordnet ist, die zur Außenseite von einer Fassadenabdeckung (11) in Form von Fassadenelementen (12) abgedeckt ist, **dadurch gekennzeichnet, dass** zwischen der Fassadenabdeckung (11) und der Dämmung (6) ein bahnförmiges Verbundmaterial (1) nach einem der Ansprüche 1 bis 10 als Fassadenbahn (1a) angeordnet ist.

14. Dachkonstruktion (15) eines Gebäudes mit einer Dachunterkonstruktion (6, 20, 21), die eine Dämmung (6) umfasst und zur Außenseite von einer Dachabdeckung (16) in Form von Dachelementen (17) abgedeckt ist, **dadurch gekennzeichnet, dass** zwischen der Dachdeckung (16) und der Dämmung (6) ein bahnförmiges Verbundmaterial (1) nach einem der Ansprüche 1 bis 10 als Dachbahn (1b), insbesondere als Dachunterspann- oder Dachabdeckbahn angeordnet ist.
